# EUROPEAN PATENT SPECIFICATION

(11) **EP 3 628 978 B1**
(45) Date of publication and mention of the grant of the patent: **28.04.2021**
(21) Application number: 18196566.6
(22) Date of filing: 25.09.2018
(51) Int. Cl.: G01D 4/00, G06Q 50/06

(54) **COMPUTER-IMPLEMENTED METHOD FOR DETECTING CONSUMERS COMMITTING FRAUD IN THE CONSUMPTION OF A UTILITY**
COMPUTERIMPLEMENTIERTES VERFAHREN ZUM ERKENNEN VON VERBRAUCHERN, DIE BETRUG BEIM VERBRAUCH BEI EINEM VERSORGER BEGEHEN
PROCÉDÉ MIS EN OEUVRE PAR ORDINATEUR POUR DÉTECTER DES CONSOMMATEURS QUI COMMETTENT UNE FRAUDE DANS LA CONSOMMATION D'UN SERVICE

(43) Date of publication of application: 01.04.2020
(73) Proprietor: SUEZ Groupe, 92040 Paris La Défense (FR)
(72) Inventor: CLAUDIO, Karim, 08036 Barcelona (ES); LECLERC, Cyril, 33110 Le Bouscat (FR)
(74) Representative: Sugrañes Patentes y Marcas

(56) References cited:
- US-A1- 2010 027 432
- US-A1- 2014 358 838
- US-A1- 2017 082 665
- US-A1- 2018 150 547

## Description

### Technical field of the invention

The invention relates to a method for detecting consumers committing fraud in the consumption of a utility, such as water, when an abnormal event in a utility distribution network is detected, thus being able to trigger a fraud alert associated with the consumers potentially committing fraud.

### Background of the invention

Distribution networks of utilities can be compared to living systems that evolve according to environment. This environment includes the territory in which the utility network is set up but also the consumers using the utility (water, gas, electricity) supplied by the system. Therefore, a network can be subjected to losses, detected as abnormal events causing a decrease of its efficiency.

Losses can be classified into two main categories: technical losses, that are mainly due to the network degradation; and non-technical losses, also called commercial losses, caused mainly by frauds and meters inaccuracies

Networks have been equipped during the last years with sensors that are able to detect the technical losses, usually as leaks in the network. Yet operators still have difficulties, in case of efficiency drops, detected as abnormal events, to associate these episodes with fraud events, if no leak has been detected and it is even more difficult to identify specific fraud-consumers.

Document US5819226 discloses a method based on a scoring method using machine learning techniques for solving a non-linear discrimination problem. The purpose of this method is to build a general model with a set of indicators that will help to identify whether or not a consumer can be targeted as fraud-consumer. However, one of the major limits in using the described method remains in the difficulty to build exhaustive indicators or exhaustive training set that are able to reflect the different behaviors of each consumer and take into consideration the variability associated with external factors other than the consumption of the consumer.

Document US7310590 discloses a method based on designing a reference situation (model), which is compared to the situation (current measure) when an abnormal event is detected, and in case of significant difference between what should have occurred in the model and what actually occurred as a current measure, an event/abnormality is detected and associated to a consumer. This method calibrates different time series model and counts in for how many models the given value differs significantly from the models outputs, and set a threshold on the number of differences to trigger an alert. However, when considering real-time data (or at least hourly/daily data), a significant difference between several models and the current situation might not be relevant as some specific event can explain a punctual drop of consumption. Therefore, using this model with hourly/daily consumption data, which is important for granularity and helps confidently triggering a fraud alert, highly increases the rate of false alarm, making the detection process inefficient

US2014/358838 discloses another method of fraud detection in a utility network involving weather data and household characteristics together with the consumption data to compute residuals.

Also, methods for detecting common patterns in the behavior of the consumption of consumers of a utility network are known, such as the described in document WO2017103069A1. However, those methods do not allow detecting individual consumers committing fraud when an event/abnormality is detected in a utility network.

It is therefore an objective of the present invention providing a method to quickly and confidently detect consumer potentially committing fraud in utility distribution networks that can explain episodes of network efficiency decrease, correlated to non-technical losses.

### Description of the invention

The invention describes a computer-implemented method for detecting fraud in the consumption of a utility by a consumer, preferably the utility being water, the method comprising: detecting an abnormal event in a utility distribution network associated with the consumer, usually a drop in the utility distribution network efficiency; obtaining consumption readings of the utility of the consumer; generating a time-series forecasting model of the consumption of the consumer; calculating prediction errors between the time-series forecasting model and the consumption readings before and after the abnormal event; clustering prediction errors in time sequences, such that a time sequence of points where each point is the prediction error at a given time are grouped in one or more clusters; and detecting that the consumer is potentially committing fraud if the number of clusters of prediction errors is more than one. After detecting that the consumer is potentially committing fraud, it is, the consumer is candidate or likely of committing fraud, a number of actions can be executed to further investigate the behavior of the user. One of such actions being triggering a fraud alert associated to the consumer, another action could be cutting off the supply of the utility to the consumer. Therefore, once an abnormal event is detected in the utility distribution network, a fraud alert can be triggered for a consumer. Given that several consumers are associated with the utility distribution network, then detecting that one or more consumers are potentially committing fraud is possible and, for example, a fraud alert can be triggered for each consumer, thus being able to directly discard consumers for which no alert has been triggered, or selecting the consumers for which a fraud alert has been triggered for further investigation. Advantageously, once an abnormal event is detected, the computer-implemented method allows narrowing the number of consumers that must be investigated for committing fraud of having a leak or a malfunctioning meter. Naturally, this method is also suitable for detecting fraud in other utility networks such as gas or electricity. Also, the time-series forecasting model of every consumer can be generated in advance and stored, considering also the option of regularly updating the models, so once an abnormal event is detected, the method can be performed quickly for each of the one or more consumers associated with the utility distribution network where the abnormal event has been detected. Therefore, this method has the advantage of using individual fitted model that can be used specifically for a given customer, considering his own habits. Also, the innovation doesn't look out for particular outliers but for a cluster of outliers, close in time, that characterizes a fraud.

Using time-series forecasting models enable to catch up the past behavior of a consumer and project it in the future taking into account trends and seasonality in consumption. Unlike the scoring or clustering methods known in the prior art, in the method of the present invention each time-series forecast model is calibrated specifically for each consumer which is not possible with a predefined set of indicators.

Therefore, the method according to an embodiment of the invention uses real-time consumption data or automatic meter consumption readings, to identify consumption pattern changes, for example a specifically significant decrease of consumption, that can be interpreted as fraud event. Thus, starting from a statistical control process of the network losses where an abnormal event can be detected, the method allows identifying this event as a technical loss such as leakage, burst or a non-technical loss such as fraud, correlating the moment when the abnormal event occurs to a significant drop in some customer's consumption pattern, thus triggering a fraud alert associated to those consumers.

According to an embodiment of the invention, the step of generating the time-series forecasting model comprises training a time-series model with historic consumption readings of the consumer, therefore a model can be tailored to the consumption habits of each consumer. According to another embodiment of the invention the step of generating the time-series forecasting model comprises recalibrating the time-series model with historic consumption readings of the consumer. Usually the training of the time-series model occurs once at the time of initializing the models and a recalibration usually occurs after some time after having trained the model, for example after a month or a year. The recalibration may be periodical, for example once a year.

According to an embodiment of the invention, the step of generating the time-series forecasting model further comprises training the time-series model with seasonal data, such as holidays or weather, which are external data not directly related to the consumers, therefore being able to compensate abnormal consumptions, for example a higher consumption of water due to high temperatures. Thus, external effects like weather or holidays that have a huge impact on consumption can be taken into account and unlike the scoring or clustering methods known in the prior art, each time-series forecast model is calibrated specifically for each consumer, taking therefore individual effects and also specific effects like weather or holidays, which is not possible with a predefined set of indicators.

According to an embodiment of the invention, the step of generating a time-series forecasting model of the consumption of the consumer comprises using a Holt-Winters exponential smoothing algorithm, that from a number of points, for example from the past consumption of the consumer, optionally compensated with external data, can generate a forecasting function.

According to an embodiment of the invention, the step of obtaining consumption readings of the utility of the consumer can comprise receiving consumption readings of the utility meter associated with the consumer, therefore the consumption can be directly obtained from the meter of the consumer without requiring additional devices. The consumption readings can be an absolute reading, such as the reading of a utility meter, for example cubic meters at a given time, or a relative reading, for example the difference of cubic meters in a day.

According to an embodiment of the invention, the consumption readings can be periodic consumption readings of the consumer, for example daily, so a consumption reading on a given period is used.

The invention envisages that the consumption readings can be night consumptions readings of the consumer as night consumptions readings tend to be more stable and not having that many peaks, being night a period of generally significant lower consumption.

According to an embodiment of the invention, a cluster of prediction errors has at least seven points in a time sequence, thus requiring the consumption readings to differ of the time-series forecasting model during a space of time wide enough. Concretely, when the consumption readings are daily, a cluster of prediction errors should comprise at least one week.

Preferably, the step of clustering prediction errors in time sequences, for example once per week, comprises using a density-based spatial clustering of applications with noise (DBSCAN) algorithm, allowing grouping, this is, clustering the cloud of points of the prediction errors, forming one cluster, or more clusters when possible. The prediction errors may be depicted as a time sequence of points, each point being the prediction error at a given time.

According to an embodiment of the invention, the method further comprises calculating a fraud score associated to a consumer comprising on one or more of: a time between the start of the cluster after the event and the event; an average value of the prediction errors after the event; and an average consumption of the consumer before the event, thus allowing to rank or classify the likelihood of fraud of the consumer. Advantageously, the score can be a weighted sum of the normalized values of, at least, the time between the start of the cluster after the event and the event; the average value of the prediction errors after the event; and the average consumption of the consumer before the event. Naturally, other metrics for calculating the fraud score can also be used.

A computer-implemented method for detecting fraud in the consumption of a metered utility is intended to be used for a plurality of consumers when an abnormal event is detected in the utility distribution network associated with the plurality of consumers, the method comprising performing the previously disclosed method for each consumer of the plurality of consumers and further classifying the fraud alerts. The classification of the consumers potentially committing fraud may be simply binary, it is, separating consumers for which a fraud has potentially been detected, and consumers not potentially committing fraud. The classification of consumers potentially committing fraud can advantageously comprise ranking the consumers, for example when the detection is associated with a score.

According to another aspect of the invention, it is disclosed a computer program comprising instructions which, when the program is executed by a computer, cause the computer to carry out the steps of the method of the present invention; a data processing apparatus comprising means for carrying out the method of the present invention; and a utility distribution network comprising such data processing apparatus.

### Brief description of the drawings

As a complement to the description provided herein and for the purpose of helping to make the characteristics of the invention more readily understandable, this specification is accompanied by a set of drawings, which by way of illustration and not limitation, represent the following:
Figs. 1a and 1b show a time-series forecasting model and a consumption reading, and their clustered prediction errors for a first consumer;
Figs. 2a and 2b show a time-series forecasting model and a consumption reading, and their clustered prediction errors for a second consumer;
Figs. 3a and 3b show a time-series forecasting model and a consumption reading, and their clustered prediction errors for a third consumer;
Figs. 4a and 4b show a time-series forecasting model and a consumption reading, and their clustered prediction errors for a fourth consumer.

### Detailed description of an embodiment of the invention

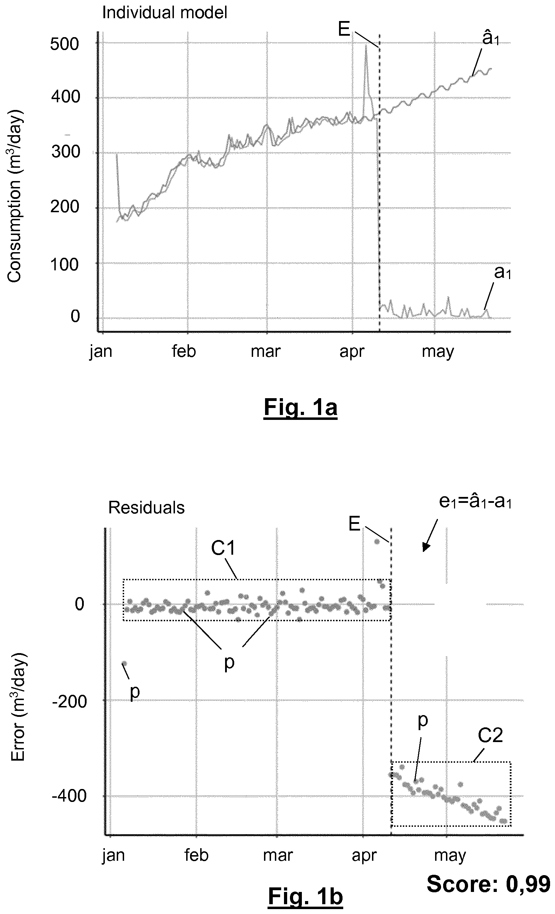

Fig. 1 a shows a first consumption reading a1 of water as a utility for a single first consumer during a time span of some moths. This first consumption reading a₁ can be provided by meters installed for each single consumer by the utility company, that can provide real-time or periodical readings of the consumed cubic meters of water of the first consumer, so the utility company can monitor the consumption of water for that first consumer. Fig 1 a shows, for this first consumer, the cubic meters consumed per day, each day.

Fig. 1a also shows a first time-series forecasting model â₁ corresponding to this first consumer during the same time span, shown overlapping the first consumption readings a₁.

This first time-series forecasting model â₁ is generated, usually in advance, by training a time-series model with historic consumption readings a₁ of the first consumer, it is, past consumption readings of the first consumer, for example in previous years, such that the model can forecast the estimated future consumptions of the first consumer without a significant error. Also, seasonal data can be used when training the time-series model â₁, using external data not directly associated with the single user such as average holiday seasons, in which a decrease in water usage is expected as consumers are not often at home; or weather, expecting an increased demand of water when weather temperatures are high.

The historic consumption readings a₁ and seasonal data are combined and used, preferably using a Holt-Winters exponential smoothing algorithm, for generating the first time-series forecasting model â₁ shown in Fig. 1a.

Preferably, the consumption readings are periodic, most preferably daily, so an increase or decrease of consumption every day can be tracked. Even more preferably, the consumption readings are taken at night, providing more stable readings.

As it can be seen at the beginning of the graph of Fig. 1a, the first consumption readings a₁ and the first time-series forecasting model â₁ tend to follow a similar pattern. Although consumption readings a₁ and time-series forecasting model â₁ are depicted as continuous functions, the skilled person would clearly understand that such linear functions can be obtained by the interpolation of discrete functions, as the cubic meters per day data of Fig. 1a will be usually a discrete function. As the skilled person would also know, continuous functions can be sampled into discrete functions by periodically taking values of the continuous function.

The first and other consumers are associated with the same utility distribution network, therefore when an abnormal event E in the utility distribution network is detected, it is desirable knowing, or at least filtering, the consumers that may have caused a loss causing the abnormal event, so only a small part of consumers should be further investigated. The abnormal event may be caused by a technical fault in the consumer internal network (for example a leakage), known as a technical loss, or by a fraud attempt caused by the consumer (for example a circumvention of the meter), known as a non-technical loss. Therefore, once detected that one or more consumers are potentially committing fraud, an alert can be triggered on those consumers and further investigation directed only to those consumers is advisable, in order to detect the consumer or consumers that have caused the abnormal event. Other actions are also possible when detecting that the consumer is potentially committing fraud, it is, when the number of clusters of prediction errors is more than one, such as preventively cutting off the supply of the utility to those users.

Therefore, the computer-implemented method of the present invention can be advantageously used for triggering fraud alerts in consumers associated with the utility distribution network which may be committing fraud and to which an additional investigation should be individually conducted, such as reviewing the status of the meters, since a meter inaccuracy or a malfunctioning meter can also be the cause of the abnormal event E.

As previously indicated, the computer-implemented method obtains the consumption readings a₁ of the first consumer and generates a time-series forecasting model â₁ of the consumption of the consumer, per each consumer as will be shown later on. Advantageously, the time-series forecasting model â₁ of the consumption of each consumer can be generated in advance and stored, so it is not necessary generating the time-series forecasting model â₁ once the abnormal event E is detected, as the models can be stored in a database, being retrieved and updated when necessary.

The method further comprises calculating prediction errors e₁ between the time-series forecasting model â₁ and the consumption readings a₁ before and after the abnormal event, as shown in Fig. 1b. Therefore, obtaining a cloud of points p representing the errors between the forecasting model â₁ and the real consumption, as consumption readings a₁, before and after the abnormal event E.

In the present case, as the cloud of points p of calculated prediction errors e₁ are calculated, the computer-implemented method further comprises clustering the prediction errors C1, C2 in time sequences. Preferably, at least a predetermined number of points in a time sequence following a similar trend are necessary for being considered a cluster C1, C2. In the present example, this predetermined number of points are seven points. Therefore, when prediction errors e₁ correspond to daily readings, at least one week of the prediction errors e₁ should follow a similar trend, it is, the errors being close enough and not widely diverging. Therefore, a significant number of points following a similar trend are necessary for being considered a cluster C1, C2. The step of clustering prediction errors in time sequences is preferably performed using a density-based spatial clustering of applications with noise (DBSCAN) algorithm.

Once error points are clustered, a fraud alert associated to the specific consumer will be triggered if the number of clusters of prediction errors is more than one. In this case, as the number of clusters C1, C2 are two, a fraud alert associated to the first consumer would be triggered.

Also, the computer-implemented method may further comprise the step of calculating a fraud score, it is, a numerical score related to the likeliness of having detected fraud on the consumer, based on the time between the abnormal event and the start of the cluster after the event; average values of the prediction errors after the event; and average consumption of the consumer before the event. Specifically, the score is a weighted sum of the normalized values of the time between the start of the cluster after the event and the event; average values of the prediction errors after the event; and average consumption of the consumer before the event. This fraud score is especially useful when the computer implemented method is performed for multiple consumers, thus being able to rank and classify the fraud score of the consumers potentially committing fraud, thus prioritizing the consumers to be investigated first, as will be explained later on.

This method can be executed by a computer program comprising instructions which, when the program is executed by a computer, cause the computer to carry out the steps of the method, it is, once an abnormal event is detected, calculating prediction errors of a consumer between a time-series forecasting model, that may be generated in advance, and the consumption readings of the consumer, and detecting that the consumer is potentially committing fraud if the number of clusters of prediction errors is more than one, therefore triggering a fraud alert associated to the said consumer is possible. Naturally, this method should be performed per each consumer that may potentially be committing fraud. The method can be executed in a data processing apparatus, such as a server or a computer, comprising means for carrying out the method, therefore the utility distribution network comprises such data processing apparatus for triggering fraud alert associated to the consumers that may be committing fraud once an abnormal event E is detected.

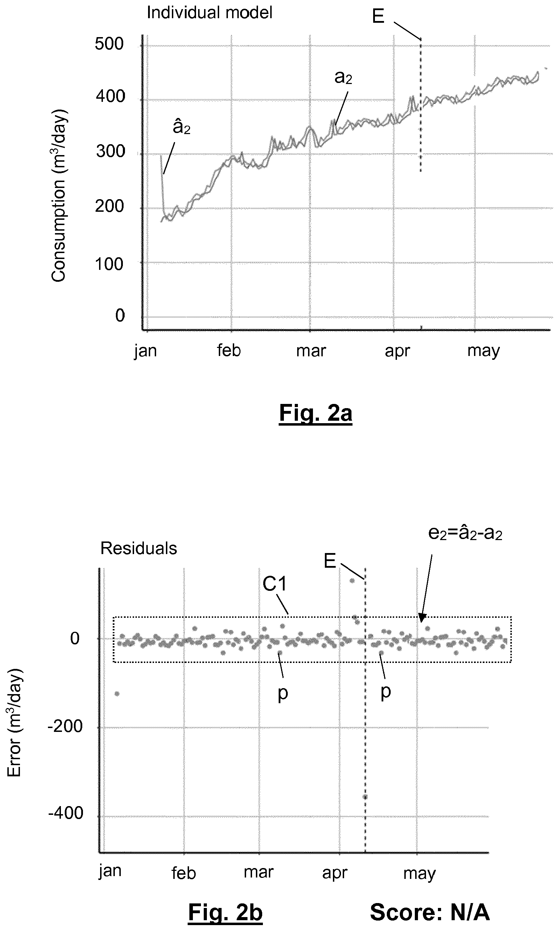

Fig. 2a and 2b show graphics explaining the computer-implemented method for a second consumer once the abnormal event E is detected. In this case, as it can be seen, prediction error e₂ is calculated between the time-series forecasting model â₂ and the consumption readings a₂ before and after the abnormal event E. The time-series forecasting model â₂ is generated in an equivalent way as previously explained for the first consumer, that is, using historic consumption readings of the second consumer and combining them with seasonal data, and then using a Holt-Winters exponential smoothing algorithm for generating the time-series forecasting model â₂. Therefore, each consumer is associated with a customized time-series forecasting model instead of having a general model to be used for all consumers. Other forecasting algorithm instead of a Holt-Winters exponential smoothing algorithm may also be suitable.

In this case, as it can be clearly seen in Fig. 2b only one cluster C1 is created, therefore, a fraud alert associated to this second consumer will not be triggered, as the number of clusters of prediction errors is only one and no fraud score is necessary, or it may be considered to be zero. Also, in this case, the step of clustering prediction errors in time sequences is performed using a density-based spatial clustering of applications with noise (DBSCAN) algorithm, however, other clustering algorithm may also be suitable, but it is desirable using the same clustering algorithm for all consumers, so more consistent results are obtained.

It is envisaged that this situation of not triggering a fraud alert will be found for most consumers of the distribution network. Then, once an abnormal event E is detected, only a small number of consumers will trigger a fraud alert, thus simplifying the investigation that has to be done individually. Moreover, since a fraud score can be calculated, the potentially consumers committing fraud may be ranked, therefore starting the investigation by the consumers with the highest fraud score, optimizing the time and resources for further investigation.

Therefore, compared with the state of the art where the investigators had to guess in a utility distribution network which consumers were most likely to commit fraud once an abnormal event E is detected, thanks to the computer-implemented method of the present invention the investigators can quickly address the fraud or faulty meter by not only identifying the consumers for which a fraud alert is triggered, also obtaining a ranked score of the most likely consumers for which a fraud alert has been triggered.

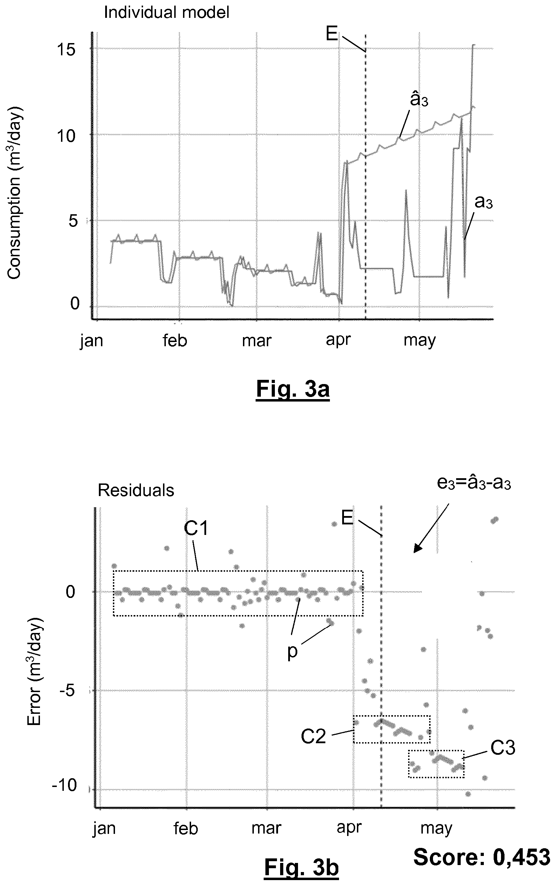

Figs. 3a and 3b discloses graphics explaining the computer-implemented method for a third consumer. In this case, Fig. 3a shows the consumption readings a₃ and the time-series forecasting model â₃ associated with the consumption of the third consumer. Fig. 3b shows the prediction errors e₃ between the time-series forecasting model â₃ and the consumption readings a₃ before and after the abnormal event. As it can be seen in Fig. 3b, prediction errors C1, C2 and C3 can be clustered in time sequences, therefore the third consumer will be detected as potentially committing fraud, and a fraud alert associated with the third consumer can be triggered, as the number of clusters of prediction errors is more than one, it is, three. However, a fraud score of 0,453 will be calculated as a weighted sum of the normalized values of the time between the start of the cluster after the abnormal event E and the abnormal event E; average values of the prediction errors after the event; and average consumption of the consumer before the event. As it can be seen, the cluster after the event C2 starts well before the abnormal event E and therefore this clustering can be due to other issues independent to the abnormal event E under investigation. Therefore, when comparing the fraud score of the third consumer with the fraud score of the first consumer, which is 1, then an investigation would start with the first consumer, who is more likely to be committing fraud of having a malfunctioning meter.

Additionally, the time between the start of the cluster after the abnormal event E and the abnormal event E is the shortest for the first consumer among all the consumers, thus the normalized value of the time between the start of the cluster after the abnormal event E and the event for the first consumer would be 1. Also, the average values of the prediction errors after the abnormal event E are the highest among the consumers for the first consumer, thus the normalized value of the average values of the prediction errors after the abnormal event E would be also 1. Also, the average consumption of the consumer before the abnormal event E is the highest for the first consumer among all the consumers, thus the normalized value of the average consumption of the consumer before the abnormal event E would be also 1. Note that in other situations the normalized value 1 for any of the parameters may be placed in distinct consumers.

In this case, the fraud score will be calculated using a weight of 0.33 of each normalized value, that is, the fraud score being the average value of those three normalized values. Getting to the fraud score of 0.99.

For the third consumer, the normalized value of the time between the start of the cluster after the abnormal event E and the abnormal event E would be 0.074. Note that in this case, the start of the second cluster C2 is before the abnormal event E, thus being very unlikely that the third consumer is causing the abnormal event E.

For the third consumer the normalized value of the average values of the prediction errors after the abnormal event E would be 0.4 and the normalized value of the average consumption of the consumer before the abnormal event E would be 0.9. Getting to a fraud score of 0.453.

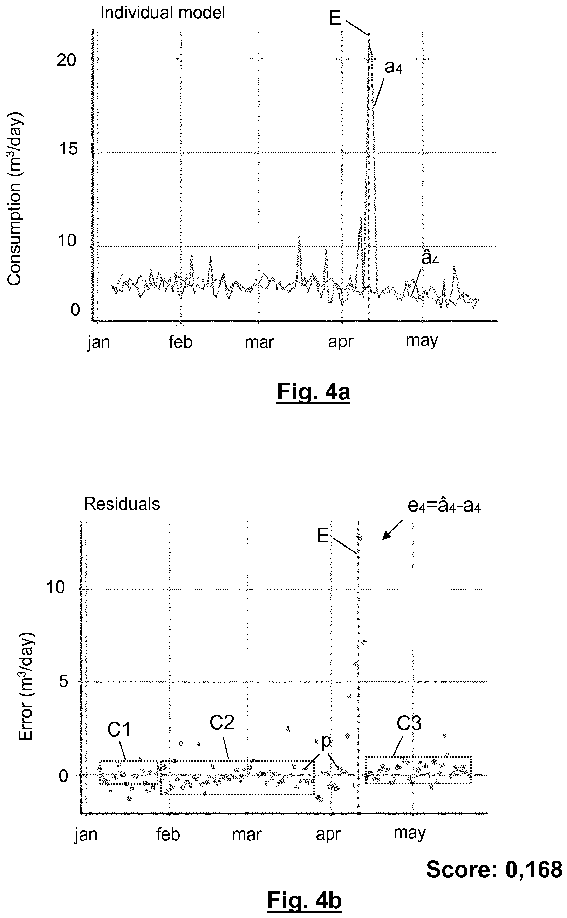

Figs. 4a and 4b disclose graphics explaining the computer-implemented method for a fourth consumer. In this case, Fig. 4a shows the consumption readings a₄ and the time-series forecasting model â₄ associated with the consumption of the fourth consumer. Fig. 4b shows the prediction errors e₄ between the time-series forecasting model â₄ and the consumption readings a₄ before and after the abnormal event E. As it can be seen in Fig. 4b, prediction errors C1, C2 and C3 can be clustered in time sequences, therefore a fraud alert associated with the fourth consumer will be triggered, as the number of clusters of prediction errors is more than one, it is three.

For the fourth consumer, the normalized value of the time between the start of the cluster after the abnormal event E and the abnormal event E would be 0.4.

Note that for the fourth consumer the normalized value of the average consumption of the consumer before the abnormal event E is 0.02 and the normalized value of the average values of the prediction errors after the abnormal event E is 0.09, so values of the prediction error after the abnormal event E are close to 0, thus being unlikely that the fourth consumer had caused the abnormal event E, getting to a fraud score of 0.168. Thus, a fraud score of 0,168 will be calculated as a weighted sum of the normalized values of the time between the start of the cluster after the abnormal event E and the abnormal event E; average values of the prediction errors after the event; and average consumption of the consumer before the event. In this case, note that the average values of the prediction errors after the event are close to 0, and that therefore the clustering can be due to other circumstances not related to the abnormal event E under investigation. Then, when comparing the fraud score of the first, third and fourth consumers, an investigation would start with the first consumer, who is more likely to be committing fraud of having a malfunctioning meter, then the third and finally the fourth consumer.

Therefore, the computer-implemented method for detecting fraud in the consumption of a metered utility can be used for a plurality of consumers when an abnormal event is detected in the utility distribution network, the method allowing detecting consumers potentially committing fraud and even classifying those potentially committing fraud consumers, so further individual investigation can be efficiently started, such as sending an inspector or cutting off the supply of the utility to those consumers.

## Claims

1. A computer-implemented method for detecting fraud by a consumer in the consumption of a utility, preferably the utility being water, the method comprising:
a. detecting an abnormal event (E) in a utility distribution network associated with the consumer,
b. obtaining consumption readings (a₁, a₂, a₃, a₄) of the utility of the consumer;
c. generating a customized time-series forecasting model (â₁, â₂, â₃, â₄) of the consumption of the consumer;
d. calculating prediction errors (e₁, e₂, e₃, e₄) between the customized time-series forecasting model and the consumption readings before and after the detected abnormal event;
e. clustering (C1, C2, C3) the prediction errors in time sequences; and
f. detecting that the consumer is potentially committing fraud if the number of clusters of prediction errors is more than one.

2. A computer-implemented method according to claim 1, wherein the step of generating the time-series forecasting model comprises training a time-series model with historic consumption readings of the consumer.

3. A computer-implemented method according to claim 2, wherein the step of generating the time-series forecasting model further comprises training the time-series model with seasonal data.

4. A computer-implemented method according to any of the preceding claims, wherein the step of generating a time-series forecasting model (â1, â2, â3, â4) of the consumption of the consumer comprises using a Holt-Winters exponential smoothing algorithm.

5. A computer-implemented method according to any of the preceding claims, wherein the step of obtaining consumption readings (a1, a2, a3, a4) of the utility of the consumer comprises receiving consumption readings of the utility meter associated with the consumer.

6. A computer-implemented method according to any of the preceding claims, wherein the consumption readings (a1, a2, a3, a4) are periodic consumption readings of the consumer.

7. A computer-implemented method according to any of the preceding claims, wherein the consumption readings (a1, a2, a3, a4) are night consumptions readings of the consumer.

8. A computer-implemented method according to any of the preceding claims, wherein a cluster (C1, C2, C3) of prediction errors (e1, e2, e3, e4) has at least seven points in a time sequence.

9. A computer-implemented method according to any of the preceding claims, wherein the step of clustering (C1, C2, C3) prediction errors (e1, e2, e3, e4) in time sequences comprises using a density-based spatial clustering of applications with noise (DBSCAN) algorithm.

10. A computer-implemented method according to any of the preceding claims, further comprising calculating a fraud score for the consumer potentially committing fraud comprising on one or more of:
a. time between the abnormal event (E) and the start of the cluster (C1, C2, C3) after the abnormal event (E);
b. average value of the prediction errors after the abnormal event (E); and
c. average consumption of the consumer before the abnormal event (E).

11. A computer-implemented method according to claim 10 wherein the score is a weighted sum of the normalized values of the:
a. time between the abnormal event (E) and the start of the cluster (C1, C2, C3) after the abnormal event (E); and
b. average value of the prediction errors after the abnormal event (E); and
c. average consumption of the consumer before the abnormal event (E).

12. A computer-implemented method for detecting fraud in the consumption of a metered utility for a plurality of consumers when an abnormal event (E) is detected in the utility distribution network associated with the plurality of consumers, the method comprising performing a method according to any of the preceding claims 10 to 11 for each consumer of the plurality of consumers with a customized time-series forecasting model (â1, â2, â3, â4) of the consumption of each consumer, and classifying the fraud scores for the consumers potentially committing fraud.

13. Computer program comprising instructions which, when the program is executed by a computer, cause the computer to carry out the steps of the method of any of the preceding claims.

14. A data processing apparatus comprising means for carrying out the method of any of the claims 1 to 12.

15. Utility distribution network comprising a data processing apparatus according to the claim 14.

## Patentansprüche

1. Computerimplementiertes Verfahren zum Erkennen von Betrug vonseiten eines Verbrauchers beim Verbrauch bei einem Versorger, wobei der Versorger vorzugsweise Wasser ist, wobei das Verfahren Folgendes umfasst:
a. das Erkennen eines ungewöhnlichen Ereignisses (E) in einem Versorgerverteilungsnetzes, welches mit dem Verbraucher assoziiert ist,
b. das Erhalten von Verbrauchsablesungen (a₁, a₂, a₃, a₄) beim Versorger des Verbrauchers;
c. das Erzeugen eines individuell eingerichteten Zeitreihenprognosemodells (â₁, â₂, â₃, â₄) des Verbrauchs des Verbrauchers;
d. das Berechnen von Vorhersagefehlern (e₁, e₂, e₃, e₄) zwischen dem individuell eingerichteten Zeitreihenprognosemodell und den Verbrauchsablesungen vor und nach dem ungewöhnlichen Ereignis;
e. die Clusterbildung (C1, C2, C3) der Vorhersagefehler in zeitlichen Abfolgen; und
f. das Erkennen, dass der Verbraucher möglicherweise Betrug begeht, wenn die Anzahl von Clustern von Vorhersagefehlern mehr als eins ist.

2. Computerimplementiertes Verfahren nach Anspruch 1, wobei der Schritt des Erzeugens des Zeitreihenprognosemodells das Trainieren eines Zeitreihenmodells mit historischen Verbrauchsablesungen des Verbrauchers umfasst.

3. Computerimplementiertes Verfahren nach Anspruch 2, wobei der Schritt des Erzeugens des Zeitreihenprognosemodells zusätzlich das Trainieren des Zeitreihenmodells mit saisonalen Daten umfasst.

4. Computerimplementiertes Verfahren nach einem der vorhergehenden Ansprüche, wobei der Schritt des Erzeugens eines Zeitreihenprognosemodells (ä1, ä2, ä3, ä4) des Verbrauchs des Verbrauchers das Verwenden eines exponentiellen Holt-Winters-Glättungsalgorithmus umfasst.

5. Computerimplementiertes Verfahren nach einem der vorhergehenden Ansprüche, wobei der Schritt des Erhaltens von Verbrauchsablesungen (a1, a2, a3, a4) beim Versorger des Verbrauchers das Empfangen von Verbrauchsablesungen beim Versorgermessgerät, welche mit dem Verbraucher assoziiert sind, umfasst.

6. Computerimplementiertes Verfahren nach einem der vorhergehenden Ansprüche, wobei die Verbrauchsablesungen (a1, a2, a3, a4) periodische Verbrauchsablesungen des Verbrauchers sind.

7. Computerimplementiertes Verfahren nach einem der vorhergehenden Ansprüche, wobei die Verbrauchsablesungen (a1, a2, a3, a4) Nachtverbrauchsablesungen des Verbrauchers sind.

8. Computerimplementiertes Verfahren nach einem der vorhergehenden Ansprüche, wobei ein Cluster (C1, C2, C3) von Vorhersagefehlern (e1, e2, e3, e4) mindestens sieben Punkte in einer zeitlichen Abfolge aufweist.

9. Computerimplementiertes Verfahren nach einem der vorhergehenden Ansprüche, wobei der Schritt der Clusterbildung (C1, C2, C3) von Vorhersagefehlern (e1, e2, e3, e4) in zeitlichen Abfolgen das Verwenden einer dichtebasierten räumlichen Clusterbildung von Anwendungen mit einem Rauschalgorithmus (DBSCAN) umfasst.

10. Computerimplementiertes Verfahren nach einem der vorhergehenden Ansprüche, zusätzlich umfassend das Berechnen einer Betrugspunktzahl für den Verbraucher, welcher möglicherweise Betrug begeht, welches eines oder mehrere des Folgenden umfasst:
a. die Zeit zwischen dem ungewöhnlichen Ereignis (E) und dem Anfang des Clusters (C1, C2, C3) nach dem ungewöhnlichen Ereignis (E);
b. den Durchschnittswert der Vorhersagefehler nach dem ungewöhnlichen Ereignis (E); und
c. den Durchschnittsverbrauch des Verbrauchers vor dem ungewöhnlichen Ereignis (E).

11. Computerimplementiertes Verfahren nach Anspruch 10, wobei die Punktzahl eine gewichtete Summe der normalisierten Werte:
a. der Zeit zwischen dem ungewöhnlichen Ereignis (E) und dem Anfang des Clusters (C1, C2, C3) nach dem ungewöhnlichen Ereignis (E); und
b. des Durchschnittswertes der Vorhersagefehler nach dem ungewöhnlichen Ereignis (E); und
c. des Durchschnittsverbrauchs des Verbrauchers vor dem ungewöhnlichen Ereignis (E),
ist.

12. Computerimplementiertes Verfahren zum Erkennen von Betrug beim Verbrauch eines gemessenen Versorgers für eine Vielzahl von Verbrauchern, wenn ein ungewöhnliches Ereignis (E) im Versorgerverteilungsnetz, welches mit der Vielzahl von Verbrauchern assoziiert ist, erkannt wird, wobei das Verfahren das Durchführen eines Verfahrens nach einem der vorhergehenden Ansprüche 10 bis 11 für jeden Verbraucher der Vielzahl von Verbrauchern mit einem individuell eingerichteten Zeitreihenprognosemodell (ä1, ä2, ä3, ä4) des Verbrauchs von jedem Verbraucher, und das Klassifizieren der Betrugspunktzahlen für die Verbraucher, welche möglicherweise Betrug begehen, umfasst.

13. Computerprogramm umfassend Anweisungen, welche, wenn das Programm von einem Computer ausgeführt wird, hervorrufen, dass der Computer die Schritte des Verfahrens nach einem der vorhergehenden Ansprüche durchführt.

14. Datenverarbeitungsgerät umfassend Mittel zum Durchführen des Verfahrens nach einem der Ansprüche 1 bis 12.

15. Versorgerverteilungsnetz umfassend ein Datenverarbeitungsgerät nach Anspruch 14.

## Revendications

1. Procédé mis en œuvre par ordinateur pour détecter des fraudes d'un consommateur dans la consommation d'un service, de préférence le service étant de l'eau, le procédé comprenant :
a. la détection d'un événement anormal (E) dans un réseau de distribution de service associé au consommateur ;
b. l'obtention de lectures de consommation (a₁, a₂, a₃, a₄) du service du consommateur ;
c. la génération d'un modèle de prévisions de séries temporelles personnalisées (â₁, â₂, â₃, â₄) de la consommation du consommateur ;
d. le calcul des erreurs de prédiction (e₁, e₂, e₃, e₄) entre le modèle de prévisions de séries temporelles personnalisées et les lectures de consommation avant et après l'événement anormal détecté ;
e. le regroupement (C1, C2, C3) des erreurs de prédiction dans des séquences temporelles ; et
f. la détection du fait que le consommateur est potentiellement en train de commettre une fraude si le nombre de regroupements des erreurs de prédiction est supérieur à un.

2. Procédé mis en œuvre par ordinateur selon la revendication 1, dans lequel l'étape de génération du modèle de prévisions de séries temporelles comprend l'entraînement d'un modèle de séries temporelles avec des lectures de consommation historiques du consommateur.

3. Procédé mis en œuvre par ordinateur selon la revendication 2, dans lequel l'étape de génération du modèle de prévisions de séries temporelles comprend en outre l'entraînement du modèle de séries temporelles avec des donnés saisonnières.

4. Procédé mis en œuvre par ordinateur selon l'une quelconque des revendications précédentes, dans lequel l'étape de génération du modèle de prévisions de séries temporelles (â1, â2, â3, â4) de la consommation du consommateur comprend l'utilisation d'un algorithme de lissage exponentiel de Holt-Winters.

5. Procédé mis en œuvre par ordinateur selon l'une quelconque des revendications précédentes, dans lequel l'étape d'obtention de lectures de consommation (a1, a2, a3, a4) du service du consommateur comprend la réception de lectures de consommation du compteur du service associé au consommateur.

6. Procédé mis en œuvre par ordinateur selon l'une quelconque des revendications précédentes, dans lequel les lectures de consommation (a1, a2, a3, a4) sont des lectures de consommation périodiques du consommateur.

7. Procédé mis en œuvre par ordinateur selon l'une quelconque des revendications précédentes, dans lequel les lectures de consommation (a1, a2, a3, a4) sont des lectures de consommation nocturne du consommateur.

8. Procédé mis en œuvre par ordinateur selon l'une quelconque des revendications précédentes, dans lequel un regroupement (C1, C2, C3) d'erreurs de prédiction (e1, e2, e3, e4) possède au moins sept points dans une séquence temporelle.

9. Procédé mis en œuvre par ordinateur selon l'une quelconque des revendications précédentes, dans lequel l'étape de regroupement (C1, C2, C3) d'erreurs de prédiction (e1, e2, e3, e4) dans des séquences temporelles comprend l'utilisation d'un algorithme de regroupement spatial fondé sur la densité d'applications avec bruit (DBSCAN).

10. Procédé mis en œuvre par ordinateur selon l'une quelconque des revendications précédentes, comprenant en outre le calcul d'un score de fraude pour le consommateur qui commet potentiellement une fraude comprenant un ou plusieurs :
a. du temps entre l'événement anormal (E) et le début du regroupement (C1, C2, C3) après l'événement anormal (E) ;
b. de la valeur moyenne des erreurs de prédiction après l'événement anormal (E) ; et
c. de la consommation moyenne du consommateur avant l'événement anormal (E).

11. Procédé mis en œuvre par ordinateur selon la revendication 10, dans laquelle le score est une somme pondérée des valeurs normalisées :
a. du temps entre l'événement anormal (E) et le début du regroupement (C1, C2, C3) après l'événement anormal (E) ; et
b. de la valeur moyenne des erreurs de prédiction après l'événement anormal (E) ; et
c. de la consommation moyenne du consommateur avant l'événement anormal (E).

12. Procédé mis en œuvre par ordinateur pour détecter des fraudes dans la consommation d'un service équipé de compteur pour une pluralité de consommateurs lorsqu'un événement anormal (E) est détecté dans le réseau de distribution du service associé à la pluralité de consommateurs, le procédé comprenant la mise en œuvre d'un procédé selon l'une quelconque des revendications 10 à 11 pour chaque consommateur de la pluralité de consommateurs avec un modèle de prévisions de séries temporelles personnalisées (â1, â2, â3, â4) de la consommation de chaque consommateur, et le classement des scores de fraude pour les consommateurs commettant potentiellement une fraude.

13. Programme informatique comprenant des instructions qui, lorsque le programme est exécuté par un ordinateur, amène l'ordinateur à mettre en œuvre les étapes du procédé selon l'une quelconque des revendications précédentes.

14. Appareil de traitement de données comprenant des moyens pour mettre en œuvre le procédé selon l'une quelconque des revendications 1 à 12.

15. Réseau de distribution de service comprenant un appareil de traitement de données selon la revendication 14.
